# EUROPÄISCHE PATENTSCHRIFT

(11) **EP 2 769 200 B1**
(45) Veröffentlichungstag und Bekanntmachung des Hinweises auf die Patenterteilung: **16.09.2015**
(21) Anmeldenummer: 12783514.8
(22) Anmeldetag: 17.10.2012
(51) Int. Cl.: G01N 21/15, G01N 21/86

(54) **VERSCHMUTZUNGSPRÜFUNG DES FENSTERS EINER MESSVORRICHTUNG**
CONTAMINATION INSPECTION FOR THE WINDOW OF A MEASURING DEVICE
CONTRÔLE DE L'ENCRASSEMENT DE LA FENÊTRE D'UN DISPOSITIF DE MESURE

(30) Priorität: 20.10.2011 DE 102011116487
(43) Veröffentlichungstag der Anmeldung: 27.08.2014
(73) Patentinhaber: Giesecke & Devrient GmbH, 81677 München (DE)
(72) Erfinder: SACQUARD, David, 81929 München (DE); SU, Shanchuan, 85579 Neubiberg (DE)
(86) Internationale Anmeldenummer: PCT/EP2012/004344
(87) Internationale Veröffentlichungsnummer: WO 2013/056826

(56) Entgegenhaltungen:
- DE-A1- 10 159 234
- DE-A1- 10 234 431
- DE-A1- 19 901 702
- DE-A1-102004 039 049

## Beschreibung

Die vorliegende Erfindung betrifft ein Verfahren zur Verschmutzungsprüfung des Fensters einer Messvorrichtung zur Prüfung von Blattgut, eine Messvorrichtung zur Durchführung des Verfahrens und eine Vorrichtung zur Bearbeitung von Blattgut, die die Messvorrichtung aufweist.

Bei Vorrichtungen zur Prüfung von Blattgut wird das Blattgut üblicherweise entlang einer Transportrichtung an einer Messvorrichtung vorbeitransportiert und an einer oder an beiden Oberflächen beleuchtet, um das von dem Blattgut remittierte Licht und/oder durch das Blattgut transmittierte Licht mittels einer Messvorrichtung zu detektieren. Zwischen dem transportierten Blattgut und der Messvorrichtung ist ein Fenster angeordnet, das für die zu detektierenden Wellenlängen durchlässig ist, und das eine mechanische Beschädigung oder ein Verschmutzen von empfindlichen Komponenten der Messvorrichtung verhindert. Im Laufe der Zeit verschmutzen solche Fenster jedoch, so dass die Intensität des von dem Blattgut ausgehenden Lichts, das von einer Messvorrichtung detektiert wird, durch die Fensterverschmutzung verfälscht wird. Dies kann zu einer Fehlbeurteilung des Blattguts bei dessen optischer Prüfung führen. Beispielsweise kann eine Verschmutzung des Fensters entlang der Transportrichtung des Blattguts zu Streifen auf einem von dem Blattgut detektierten Bild führen. Das Fenster wird deshalb üblicherweise, wenn ein bestimmter Verschmutzungsgrad erreicht ist, gereinigt.

Zur Feststellung, wann eine Reinigung des Fensters der Messvorrichtung notwendig ist, wird die Verschmutzung des Fensters regelmäßig automatisch überprüft. Zu diesem Zweck detektiert die Messvorrichtung das Licht, das auf die Messvorrichtung trifft, wenn sich kein Blattgut im Erfassungsbereich der Messvorrichtung befindet. Die detektierte Intensität wird z.B. mit einem Referenzwert für ein sauberes Fenster verglichen. Wenn die Differenz einen vorgegebenen Wert überschreitet, wird die Notwendigkeit einer Reinigung angezeigt oder eine Reinigung automatisch durchgeführt. Alternativ kann das Fenster der Messvorrichtung manuell gereinigt werden. Da zur Reinigung üblicherweise der Betrieb der Blattgutprüfung unterbrochen werden muss, führen häufige Reinigungsarbeiten zu einer Reduzierung des Durchsatzes der zur Prüfung des Blattguts verwendeten Vorrichtung.

Zur Verschmutzungsprüfung des Fensters der Messvorrichtung wird bisher die Intensität des Hintergrunds quer zur Transportrichtung des Blattguts aufgenommen, wenn kein Blattgut im Erfassungsbereich der Messvorrichtung vorhanden ist, wie zum Beispiel in DE19901702-A1. Ohne im Erfassungsbereich vorhandenes Blattgut detektiert die Messvorrichtung üblicherweise nur eine geringe Intensität. Um das Fenster auf Verschmutzung zu prüfen, wird die detektierte Intensität des Hintergrunds mit einer Schwelle verglichen. Überschreitet die Intensität für eine oder mehrere Positionen quer zur Transportrichtung die Schwelle, so wird auf das Vorliegen einer Verschmutzung des Fensters in dem betreffenden Abschnitt des Fensters zurückgeschlossen und eine Reinigung des Fensters veranlasst. Es hat sich jedoch herausgestellt, dass, trotz dieser Verschmutzungsprüfung, das geprüfte Blattgut teilweise versehentlich als fehlerhaft, z.B. verschmutzt oder defekt, eingestuft wird, obwohl das jeweilige Blattgut selbst nicht fehlerhaft ist.

Aufgabe der vorliegenden Erfindung ist es daher, eine zuverlässigere Verschmutzungsprüfung des Fensters einer Messvorrichtung zu erreichen. Diese Aufgabe wird durch die Gegenstände der unabhängigen Ansprüche gelöst. In davon abhängigen Ansprüchen sind vorteilhafte Weiterbildungen und Ausgestaltungen der Erfindung angegeben.

Es hat sich gezeigt, dass die oben erwähnte falsche Beurteilung des Blattguts daraus resultiert, dass die bei der Prüfung des Blattguts detektierten Intensitäten durch eine Verschmutzung des Fensters verfälscht sind, die trotz der üblichen Verschmutzungsprüfung der Fenster vorliegt und bisher nicht erkannt wird. Der Erfindung liegt die Erkenntnis zugrunde, dass durch den bisherigen Vergleich der detektierten Intensität mit einer Schwelle nur "helle Verschmutzung" (vor allem lichtstreuend) detektierbar ist. Es wurde herausgefunden, dass auch eine "dunkle Verschmutzung" (vor allem lichtabsorbierend) auftritt, die bisher nicht detektierbar ist.

Wenn kein Blattgut im Erfassungsbereich der Messvorrichtung ist und von dem Hintergrund des zu detektierenden Blattguts kaum Licht auf die Messvorrichtung zurückkommt, wird von der Messvorrichtung an denjenigen Positionen quer zur Transportrichtung des Blattguts (im Folgenden als "y-Positionen" bezeichnet), die hinter unverschmutzten Fensterbereichen liegen, eine geringe Intensität detektiert. Da an denjenigen y-Positionen, die hinter einem von dunkler Verschmutzung bedeckten Fensterbereich liegen, jedoch ebenfalls eine geringe Intensität detektiert wird, können diese von den hinter unverschmutzten Fensterbereichen nicht direkt anhand ihrer Intensität unterschieden werden. Die dunkle Verschmutzung bleibt daher bisher unerkannt. Ferner wird auch helle Verschmutzung, die das Licht nur geringfügig streut, mit der bisherigen Verschmutzungsprüfung nicht zuverlässig gefunden.

Bei sauberem Fenster schwankt die detektierte Intensität als Funktion der Zeit, z.B. aufgrund von Rauschen und/oder Störungen aus der Umgebung. Bei Vorliegen einer dunklen Verschmutzung wird dagegen an denjenigen y-Positionen, an denen die Verschmutzung vorliegt, eine zeitlich relativ konstante Intensität detektiert. Der zeitliche Verlauf der Intensität eines einzelnen Spektralkanals allein hat sich jedoch als wenig aussagekräftig herausgestellt. Da Störungen bzw. Rauschen in den meisten Fällen in mehreren Spektralkanälen vorliegt, schwanken die detektierten Intensitäten an den y-Positionen ohne dunkle Verschmutzung in jedem einzelnen der mehreren Spektralkanäle. An den y-Positionen mit dunkler Verschmutzung wird dagegen in mehreren oder allen Spektralkanälen eine zeitlich relativ konstante Intensität detektiert.

Die Unterschiede in der Größe der zeitlichen Schwankungen werden durch eine erfindungsgemäße Kombination der Spektralkanäle zur Feststellung von dunkler Verschmutzung ausgenutzt. Dadurch dass die Spektralkanäle kombiniert werden, wirken sich an den y-Positionen, an denen das Fenster keine dunkle Verschmutzung aufweist, die Schwankungen mehrerer Spektralkanäle auf den kombinierten Spektralkanal aus. Der kombinierte Spektralkanal weist daher an den y-Positionen ohne dunkle Verschmutzung verstärkte Intensitätsschwankungen auf, wogegen an y-Positionen mit dunkler Verschmutzung nur sehr geringe Intensitätsschwankungen auftreten.

Die Erfindung zeichnet sich dadurch aus, dass mindestens zwei der Spektralkanäle miteinander kombiniert werden und zur Verschmutzungsprüfung des Fensters der Messvorrichtung die zeitliche Schwankung der Intensität des kombinierten Spektralkanals ausgewertet wird. Eine geringe zeitliche Schwankung der Intensität des kombinierten Spektralkanals wird als Indikator für das Vorliegen einer dunklen Verschmutzung des Fensters an der jeweiligen y-Position verwendet.

Die Messvorrichtung weist mindestens zwei Sensorzeilen auf, die quer zur Transportrichtung des Blattguts ausgerichtet sind. Jede der Sensorzeilen detektiert das von dem Blattgut ausgehende Licht in einen bestimmten Spektralkanal. Die Sensorzeilen weisen jeweils mehrere Detektionselemente auf, die quer zur Transportrichtung des Blattguts nebeneinander angeordnet sind. Jedes Detektionselement bildet z.B. eine von mehreren Messspuren, die quer zur Transportrichtung mit Lücken voneinander beabstandet sind. Alternativ können die Sensorzeilen der Messvorrichtung aber auch zur Aufnahme von Bildern des Blattguts ausgebildet sein und durch ihre Detektionselemente pixelweise die von dem beleuchteten Blattgut ausgehende Intensität quer zur Transportrichtung des Blattguts detektieren. Die Verschmutzungsprüfung kann dann anhand der in den verschiedenen Spektralkanälen aufgenommenen Bilder des Bildsensors durchgeführt werden. Die Sensorzeilen sind beispielsweise z.B. CMOS-, CCD- oder Photodiodenzeilen. Die Messvorrichtung kann auch mindestens eine Lichtquelle zum Beleuchten des Blattguts aufweisen. Die Beleuchtung erfolgt im sichtbaren Spektralbereich, im UV- oder IR-Bereich. Die zur Beleuchtung verwendeten Lichtquellen können Bestandteile der Messvorrichtung sein, oder auch außerhalb davon bereit gestellt werden. Die zur Verschmutzungsprüfung detektierten Intensitäten der verschiedenen Spektralkanäle werden bevorzugt bei eingeschalteter Beleuchtung detektiert.

Zur Verschmutzungsprüfung des Fensters detektieren die Sensorzeilen das Licht zu mehreren Detektionszeitpunkten, zu denen kein Blattgut im Erfassungsbereich der Sensorzeilen vorhanden ist. Bei der zur Verschmutzungsprüfung durchgeführten Auswertung werden die detektierten Intensitäten mindestens zwei der Sensorzeilen, die voneinander verschiedene Spektralkanäle detektieren, ausgewertet, wobei jede Sensorzeile die Intensität quer zur Transportrichtung nur in einem bestimmten Spektralkanal detektiert. Die Intensitäten werden durch die Sensorzeilen zum Beispiel an jeder y-Position für mehrere Detektionszeitpunkte, insbesondere für mindestens 5 Detekionszeitpunkte, detektiert, zu denen kein Blattgut im Erfassungsbereich vorhanden ist, z.B. mehrere unmittelbar aufeinanderfolgende Detektionszeitpunkte. Für jeden der Detektionszeitpunkte wird jeweils aus den Intensitäten, die die Sensorzeilen in ihrem jeweiligen Spektralkanal zu dem Detektionszeitpunkt detektieren, die Intensität des kombinierten Spektralkanals für den jeweiligen Detektionszeitpunkt ermittelt. Daraus ergibt sich für jeden der Detektionszeitpunkte individuell jeweils eine Intensität des kombinierten Spektralkanals als Funktion der y-Position quer zur Transportrichtung des Blattguts. An mindestens einer der y-Position quer zur Transportrichtung wird anschließend eine statistische Auswertung der Intensitäten des kombinierten Spektralkanals durchgeführt, die für die verschiedenen Detektionszeitpunkte ermittelt wurden. Die Ergebnisse dieser zeitlichen Statistik werden zur Verschmutzungsprüfung des Fensters der Messvorrichtung verwendet.

Bevorzugt detektieren die Sensorzeilen in ihrem jeweiligen Spektralkanal die Intensitäten an mehreren y-Positionen entlang der y-Richtung, wenn kein Blattgut im Erfassungsbereich der Sensorzeilen vorhanden ist. Die Intensitäten werden dabei zum Beispiel über einen oder mehrere in y-Richtung zusammenhängende Abschnitte detektiert. In einem Ausführungsbeispiel werden die Intensitäten, die die Sensorzeilen der verschiedenen Spektralkanäle zum jeweiligen Detektionszeitpunkt detektieren, für mehrere der y-Positionen jeweils individuell zu einer Intensität des kombinierten Spektralkanals kombiniert. Die in einem Spektralkanal an einer y-Position detektierte Intensität kann eine Intensität sein, die von einem einzigen Detektionselement detektiert wurde. Oder die in einem Spektralkanal an einer y-Position detektierte Intensität kann sich daraus ergeben, dass die von einigen quer zur Transportrichtung benachbarten Detektionselementen in diesem Spektralkanal detektierten Intensitäten zu einer resultierenden Intensität dieses Spektralkanals zusammengefasst werden.

Vorzugsweise wird die statistische Auswertung der Intensitäten des kombinierten Spektralkanals jeweils für mehrere der y-Positionen individuell durchgeführt und anhand der statistischen Auswertung für mehrere der y-Positionen jeweils individuell geprüft, ob an der jeweiligen y-Position des Fensters eine Verschmutzung des Fensters der Messvorrichtung vorliegt oder nicht.

Insbesondere umfasst die statistische Auswertung der Intensitäten des kombinierten Spektralkanals das Bilden einer zeitlichen Standardabweichung der Intensitäten des kombinierten Spektralkanals, die für die mehreren Detektionszeitpunkte ermittelt wurden, besonders bevorzugt auch das Bilden eines zeitlichen Mittelwerts der Intensitäten des kombinierten Spektralkanals.

Bei der statistischen Auswertung wird beispielsweise ein Quotient gebildet, in dessen Zähler der zeitliche Mittelwert der Intensität des kombinierten Spektralkanals und in dessen Nenner die zeitlichen Standardabweichung der Intensität des kombinierten Spektralkanals enthalten ist. Der Zähler und/ oder der Nenner können einen aus dem Mittelwert bzw. aus der Standardabweichung ermittelten Wert enthalten, z.B. der Nenner das Quadrat der Standardabweichung. Im Zähler kann eine Offsetkorrektur des Mittelwerts enthalten sein. Zusätzlich können im Zähler und/ oder im Nenner des Quotienten auch weitere Parameter und/oder Normierungsfaktoren enthalten sein. Insbesondere wird die zeitliche Standardabweichung der Intensitäten des kombinierten Spektralkanals für mehrere der y-Positionen jeweils individuell ermittelt und zur Verschmutzungsprüfung ausgewertet. Insbesondere werden auch der zeitliche Mittelwert und der oben genannte Quotient für mehrere der y-Positionen jeweils individuell gebildet.

Zur Verschmutzungsprüfung des Fensters kann der Quotient aus dem Mittelwert und der Standardabweichung, insbesondere für jede der y-Positionen individuell, mit einem Schwellenwert verglichen werden. Das Überschreiten des Schwellenwerts wird als Indiz dafür verwendet, dass an der jeweiligen y-Position, an welcher der Schwellenwert überschritten wird, eine Verschmutzung des Fensters vorliegen könnte. Auf das tatsächliche Vorliegen einer Verschmutzung kann bei jedem Überschreiten eines Schwellenwerts zurückgeschlossen werden, oder erst dann, wenn bei mehreren, z.B. benachbarten, y-Positionen der Schwellenwert überschritten wird. Alternativ oder zusätzlich zu dem Schwellenvergleich kann der Quotient aus dem Mittelwert und der Standardabweichung, insbesondere für mehrere der y-Positionen jeweils individuell, mit einem oder mehreren der Quotienten verglichen werden, die für in y-Richtung benachbarte y-Positionen gebildet wurden und anhand der Unterschiede zwischen den Quotienten an den verschiedenen y-Positionen auf eine Verschmutzung des Fensters zurückgeschlossen werden.

Die Intensität des kombinierten Spektralkanals kann durch eine mathematische Verknüpfung der Intensitäten der mindestens zwei verschiedenen Spektralkanäle ermittelt werden. Insbesondere kann das Kombinieren durch die mathematische Verknüpfung für mehrere der y-Positionen jeweils individuell durchgeführt werden. Die mathematische Verknüpfung kann eine Addition, Subtraktion, Division oder Multiplikation der Intensitäten der mindestens zwei Spektralkanäle sein. Gegebenenfalls gehen die einzelnen Spektralkanäle dabei mit unterschiedlicher Gewichtung in die Intensitäten des kombinierten Spektralkanals ein, falls sich die dunklen Verschmutzungen verschieden stark auf die unterschiedlichen Spektralkanäle auswirken. Welche Verknüpfung am zuverlässigsten funktioniert, hängt von der jeweiligen Ursache ab, die die Schwankungen der detektierten Intensitäten hervorruft.

Zum Ermitteln der Intensität des kombinierten Spektralkanals wird vorzugsweise eine nichtlineare Transformation der Intensität mindestens eines der mindestens zwei miteinander zu kombinierenden Spektralkanäle durchgeführt. Bevorzugt werden die Intensitäten aller Spektralkanäle, die miteinander kombiniert werden, vor oder bei der Ermittlung des kombinierten Spektralkanals nichtlinear transformiert. Insbesondere kann die nichtlineare Transformation für mehrere der y-Positionen jeweils individuell durchgeführt werden. Das nichtlineare Transformieren umfasst z.B. ein Potenzieren der in dem Spektralkanal detektierten Intensität und anschließend ein Verknüpfen der potenzierten Intensitäten der einzelnen Spektralkanäle. Das nichtlineare Transformieren hat den Vorteil, dass dies die Schwankungen der detektierten Intensitäten, die in den unverschmutzten Fensterbereichen auftreten, verstärkt, so dass die Unterscheidung von den Fensterbereichen mit dunkler Verschmutzung einfacher wird. Um die nichtlineare Transformation der detektierten Intensitäten in Echtzeit durchführen zu können, kann diese durch Look-Up-Table verfügbar gemacht werden, die in der Auswerteeinrichtung hinterlegt sind.

Bevorzugt wird das Verfahren für zwei oder mehr verschiedene kombinierte Spektralkanäle durchgeführt, wobei zur Verschmutzungsprüfung des Fensters die Ergebnisse der statistischen Auswertung aller dieser kombinierten Spektralkanäle verwendet und gegebenenfalls logisch miteinander verknüpft werden. Gegebenenfalls werden mehrere kombinierte Spektralkanäle gebildet und ausgewertet, die unterschiedliche Arten der Verknüpfung verwenden.

Die Messvorrichtung kann zur Messung der Remission des Blattguts und des von dem Fenster remittierten Lichts ausgebildet sein. Alternativ oder zusätzlich kann Messvorrichtung zur Messung der Transmission des Blattguts und des durch das Fenster transmittierten Lichts ausgebildet sein. Zur Verschmutzungsprüfung des Fensters wird das remittierte und/oder das transmittierte Licht durch die Messvorrichtung detektiert und ausgewertet. Entsprechend ist das von den Sensorzeilen detektierte Licht ein durch das Fenster remittiertes Licht und/ oder ein durch das Fenster transmittiertes Licht. Die zur Prüfung der Fensterverschmutzung verwendeten Spektralkanäle können dieselben sein, die auch für die Prüfung des Blattguts verwendet werden. Es können dafür aber auch verschiedene Spektralkanäle verwendet werden. Zum Beispiel wird die Verschmutzungsprüfung anhand von Licht im sichtbaren Bereich und/oder anhand von Licht im IR-Bereich und/ oder anhand von Licht im UV-Bereich durchgeführt.

Zur Verschmutzungsprüfung des Fensters detektieren die Sensorzeilen die Intensität des auf die Sensorzeilen treffenden Lichts zu solchen Zeitpunkten, zu denen sich kein Blattgut im Erfassungsbereich der Sensorzeilen befindet. Die Verschmutzungsprüfung wird also nicht anhand der von dem Blattgut detektierten Intensitäten durchgeführt, sondern ausschließlich anhand der Intensitäten, die die detektiert werden, wenn kein Blattgut im Erfassungsbereich der Sensorzeilen vorhanden ist. Hinsichtlich des zeitlichen Ablaufs der Prüfung von Blattgut und der Verschmutzungsprüfung der Fenster gibt es die Möglichkeit, die Verschmutzungsprüfung als gesonderte Messung in einer Vereinzelungspause der Blattgutbearbeitungsmaschine durchzuführen oder während der Blattgutprüfung, in der Lücke zwischen zwei an der Messvorrichtung vorbeitransportierten Blättern des Blattguts.

Alternativ wird die Verschmutzungsprüfung des Fensters nicht als eine gesonderte Messung zu einem Zeitpunkt, zu dem sich kein Blattgut im Erfassungsbereich der Sensorzeile befindet, durchgeführt. Vielmehr kann zur Prüfung des Blattguts eine Einzelmessung eines Blattguts über einen etwas längeren Zeitraum durchgeführt werden, als es bei der jeweiligen Transportgeschwindigkeit zur Aufnahme eines Bilds des Blattguts erforderlich wäre. Das aufgenommene Bild enthält daher nicht nur das Blattgut selbst, sondern deckt in Transportrichtung betrachtet einen etwas größeren Bereich ab, so dass auf dem Bild auch ein Abschnitt vor und/oder nach dem Blattgut enthalten ist. Dieser Abschnitt des aufgenommenen Bilds kann daher zur Verschmutzungsprüfung des Fensters der Messvorrichtung verwendet werden. Für die Verschmutzungsprüfung des Fensters wird dann ein entsprechender zweidimensionaler Bildbereich ausgewertet, der in dem aufgenommenen Bild neben dem Blattgut angeordnet ist, d.h. zeitlich vor oder nach dem Blattgut aufgenommen wurde. Die Länge des Bildbereichs entlang der Transportrichtung entspricht vorzugsweise zumindest 5 Detektionszeitpunkten der Sensorzeilen. Der Vorteil dieser Alternative ist, dass Vereinzelungspausen der Maschine, die bisher für die Verschmutzungsmessung der Fenster gemacht werden müssen, entfallen. Stattdessen kann der Bildbereich eines bei der Prüfung des Blattguts aufgenommene Bilds dazu verwendet werden, die Fensterverschmutzung zu überprüfen. Vorzugsweise wird in regelmäßigen Abständen, d.h. nach einer bestimmten Anzahl von vorbeitransportiertem Blattgut, ein entsprechender Bildbereich zur Fenster-Verschmutzungsprüfung herausgegriffen und ausgewertet, beispielsweise für jedes hundertste Bild. Es kann auch eine gemeinsame Auswertung mehrerer Bilder durchgeführt werden. Zur Prüfung einer Verschmutzung des Fensters können auch entsprechende Bildbereiche mehrerer Bilder gemeinsam ausgewertet werden.

Die Verschmutzungsprüfung wird vorzugsweise gezielt auf einen oder mehrere Teilbereiche der Fenster beschränkt, und zwar auf diejenigen Teilbereiche der Fenster, die bei der Prüfung der jeweils zu prüfenden Blattguts tatsächlich eine Rolle spielen. Das sind die Fensterbereiche, durch die das von dem Blattgut ausgehende Licht das für die Prüfung des Blattguts ausgewertet wird, tatsächlich hindurch tritt. Eine Verschmutzung eines Fensters, die quer zur Transportrichtung außerhalb des relevanten Fensterbereichs liegt, wird bei der Verschmutzungsprüfung nicht berücksichtigt, und daher wird auch keine Reinigungsaktion veranlasst. Unnötige Reinigungsaktionen aufgrund einer Verschmutzung in einem Bereich eines Fensters, der außerhalb des Teilbereichs liegt, der für die Prüfung der Banknote relevant ist, werden dadurch vermieden. Der oben genannte Bildbereich stellt daher vorzugsweise den Fensterbereich dar, der hinsichtlich seiner Breite und Lage im Strahlengang des Lichts dem geprüften Bereich des Blattguts entspricht, anhand dessen das Blattgut geprüft wird.

Die Erfindung betrifft auch die Messvorrichtung, die zur Durchführung des erfindungsgemäßen Verfahrens ausgebildet ist. Zu diesem Zweck weist die Messvorrichtung z.B. eine Auswerteeinrichtung mit entsprechender Programmierung auf. Die Messvorrichtung kann ein Bestandteil einer Vorrichtung zur Prüfung von Blattgut sein, in der die Messvorrichtung eingebaut ist. Durch die Messvorrichtung kann in Abhängigkeit des Ergebnisses der Verschmutzungsprüfung automatisch eine Reinigung des Fensters veranlasst werden. Wenn eine Fensterverschmutzung gefunden wird, kann der Betrieb der Vorrichtung automatisch unterbrochen werden und/oder eine Meldung ausgegeben werden, dass eine Reinigung des Fensters erforderlich ist. Mit der Betriebsunterbrechung kann auch eine automatische Reinigung des Fensters ausgelöst werden, beispielsweise durch Blasluft. Es kann auch vorgesehen werden, dass diese Verschmutzung bei mehreren aufeinander folgenden Verschmutzungsprüfungen erkannt werden muss, damit eine Reinigung des Fensters veranlasst wird.

Die zur Prüfung von Blattgut ausgebildete Vorrichtung kann so ausgebildet sein, dass das Blattgut entlang eines Transportpfads durch die Vorrichtung hindurchgeführt wird. Die Vorrichtung, in der die Messvorrichtung aufgenommen ist, kann eine Vorrichtung zur Prüfung für Wertdokumenten sein, insbesondere eine Banknotenbearbeitungsmaschine zur Prüfung von Banknoten, z.B. eine Sortiermaschine, ein Einzahlautomat oder Auszahlautomat. Geprüft werden kann dabei Blattgut beliebiger Art, insbesondere Wertdokumente, wie beispielsweise Banknoten, Schecks, Tickets, Gutscheine, etc. Nachfolgend wird die Erfindung beispielhaft anhand der folgenden Figuren erläutert. Es zeigen:
- Fig. 1a-b: schematische Darstellungen einer erfindungsgemäßen Messvorrichtung zur Durchführung der erfindungsgemäßen Verschmutzungsprüfung,
- Fig. 2a-f: zu einem bestimmten Zeitpunkt t₁ detektierte Intensität für zwei Spektralkanäle (Fig. 2a-b), daraus ermittelte Intensität eines kombinierten Spektralkanals (Fig. 2c), Mittelwert (Fig. 2d) und Standardabweichung (Fig. 2e) der Intensitäten des kombinierten Spektralkanals und daraus gebildeter Quotient (Fig. 2f),
- Fig. 3a-e: zu einem bestimmten Zeitpunkt t₁ detektierte Intensitäten für drei Spektralkanäle (Fig. 3a-c) und der aus dem Mittelwert und der Standardabweichung der Intensitäten des kombinierten Spektralkanals gebildete Quotient (Fig. 3d-e) für zwei verschiedene kombinierte Spektralkanäle.

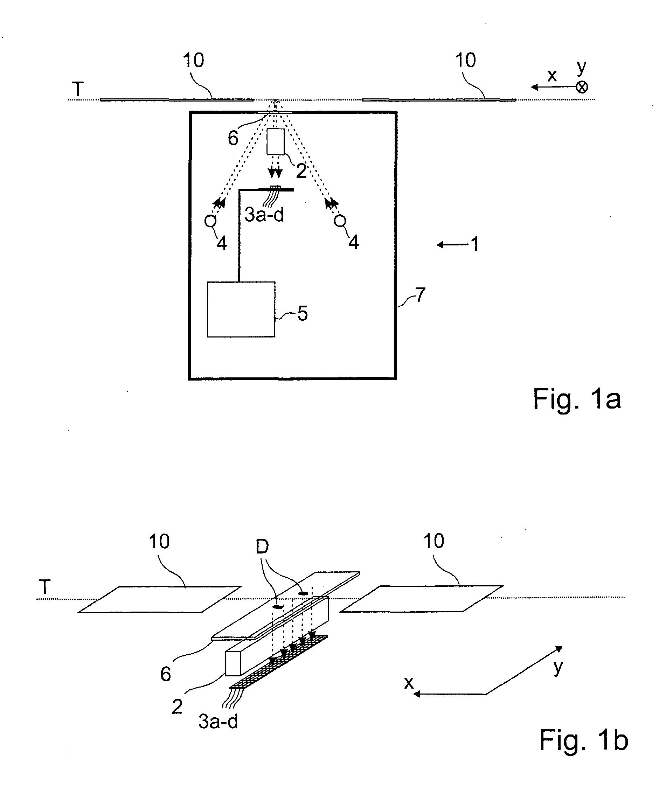

Figur 1 zeigt eine Messvorrichtung zur Prüfung von Blattgut, das auf einem Transportpfad T entlang einer Transportrichtung x an der Messvorrichtung vorbeitransportiert wird. Die Messvorrichtung 1 weist ein Gehäuse 7 auf, in dem zwei Lichtquellen 4 und vier Sensorzeilen 3a-d aufgenommen sind. Jede der Sensorzeilen 3a-d ist für nur einen bestimmten Spektralbereich empfindlich und dazu z.B. mit einem entsprechenden spektralen Filter ausgestattet. Von den Lichtquellen 4 wird Licht durch das Fenster 6 auf die Oberfläche eines im Erfassungsbereich der Messvorrichtung 1 vorhandenen Blattguts 10 aufgestrahlt. Das Licht wird von den Oberflächen des Blattguts remittiert, passiert erneut das Fenster 6 und wird, nach Passieren geeigneter optischer Elemente 2, z.B. Linsen, von den Sensorzeilen 3a-d detektiert. Die Prüfung des Blattguts und der Verschmutzung des Fensters wird in diesem Beispiel auf Basis einer Remissionsmessung durchgeführt, kann aber auch auf Basis einer Transmissionsmessung, z.B. einer Dunkelfeld-Transmissionsmessung durchgeführt werden. Die Messvorrichtung kann auch beidseitig des Transportpfads T angeordnet sein, wobei das Blattgut z.B. zwischen zwei Fenstern der Messvorrichtung hindurchgeführt wird, hinter denen jeweils Lichtquellen und Sensorzeilen angeordnet sind. Die Verschmutzungsprüfung kann für beide Fenster durchgeführt werden.

Die Messvorrichtung 1 ist in diesem Beispiel ein Bildsensor, der von den entlang der Transportrichtung x vorbeitransportierten Blattgut 10 jeweils zeilenweise ein Bild aufnimmt. Die Sensorzeilen 3a-d der Messvorrichtung 1 detektieren das Licht z.B. in den 4 Spektralkanälen Rot (R), Grün (G), Blau (B) und Infrarot (IR). Zur Verschmutzungsprüfung des Fensters 6 der Messvorrichtung 1 werden die Intensitäten des Hintergrunds entlang einer Richtung y quer zur Transportrichtung x des Blattguts 10 detektiert, wenn kein Blattgut 10 im Erfassungsbereich der Messvorrichtung 1 vorhanden ist. Die Lichtquellen 4 bleiben während der Prüfung des Blattguts und der Fensterverschmutzung z.B. permanent eingeschaltet.

In Figur 1b ist ein Teil der Anordnung aus Figur 1a perspektivisch dargestellt. Auf dem Fenster 6 ist entlang der y-Richtung beispielhaft an zwei y-Positionen eine dunkle Verschmutzung D eingezeichnet, während die übrigen Fensterbereiche frei von Verschmutzung sind. Anhand der erfindungsgemäßen Verschmutzungsprüfung wird herausgefunden, welche Pixel der Sensorzeilen 3a-d, entlang des Detektionsstrahlengangs betrachtet, hinter einer dunklen Verschmutzung D angeordnet sind, und auf das Vorliegen einer dunklen Verschmutzung D an der entsprechenden y-Position des Fensters 6 zurückgeschlossen.

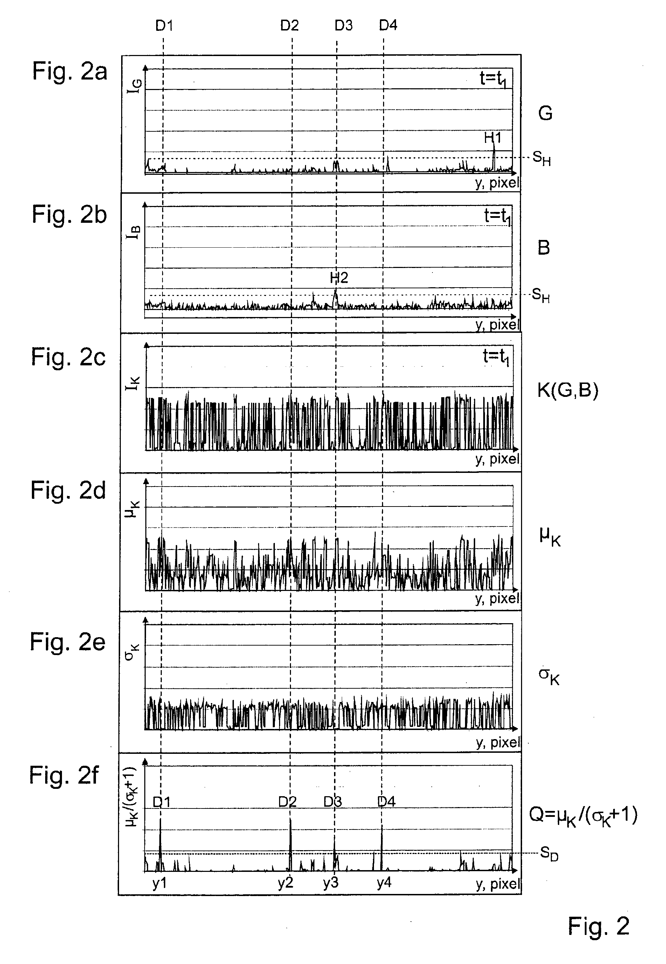

In den Figuren 2a und 2b sind die Intensitäten I_{G} des Spektralkanals G und I_{B} des Spektralkanals B als Funktion der y-Position (quer zur Transportrichtung) dargestellt, die zu einem bestimmten Zeitpunkt t₁, zu dem kein Blattgut 10 im Erfassungsbereich der Sensorzeilen 3a-d vorhanden ist, durch zwei der Sensorzeilen 3a-d detektiert werden. Ohne im Erfassungsbereich vorhandenes Blattgut detektieren die Sensorzeilen 3a-d in jedem Pixel nur eine relativ geringe Intensität des Hintergrunds. Um das Fenster auf gegebenenfalls verschmutzte Fensterbereiche zu prüfen, werden die so detektierten Hintergrundintensitäten I_{G}, I_{B} mit einer Schwelle S_{H} verglichen, vgl. Figur 2a, 2b. Überschreitet die Intensität I_{G}, I_{B} für einen oder mehrere Pixel die Schwelle S_{H}, so wird auf das Vorliegen einer hellen Verschmutzung des Fensters in dem vor diesen Pixel liegenden Abschnitt des Fensters zurückgeschlossen. In diesem Beispiel wird in dem Spektralkanal G eine "helle Verschmutzung" H1 und in dem Spektralkanal B eine helle Verschmutzung H2 detektiert. Zusätzlich wird das Fenster 6 anhand des erfindungsgemäßen Verfahrens auf dunkle Verschmutzung überprüft. Die Verschmutzungsprüfung wird durch eine Auswerteeinrichtung 5 der Messvorrichtung durchgeführt, die innerhalb oder außerhalb des Gehäuses 7 der Messvorrichtung angeordnet sein kann.

Die Intensitäten I_{G} und I_{B} werden zu mehreren aufeinanderfolgenden Zeitpunkten t=t₁, t₂, t₃,... , zu denen kein Blattgut im Erfassungsbereich vorhanden ist, detektiert. Für jeden dieser Zeitpunkte t=t₁, t₂, t₃,... , wird individuell die Intensität eines kombinierten Spektralkanals K ermittelt. Figur 2c zeigt die aus den Intensitäten I_{G} und I_{B} der Figuren 2a und 2b pixelweise ermittelte Intensität I_{K} des kombinierten Spektralkanals K, die für den Zeitpunkt t₁ gilt. Zur Kombination der Spektralkanäle G und B wurden in diesem Beispiel die Intensitäten I_{G} und I_{B} jeweils nichtlinear transformiert, um eine nichtlineare Verstärkung der Schwankungen der Intensitäten I_{G}, I_{B} des jeweiligen Spektralkanals G, B zu erreichen. Als nichtlineare Transformation kann z.B. eine Potenzfunktion a_{G}·I_{G}^{r}, a_{B}·I_{B}^{r}, mit dem Exponenten r, wobei r<1 oder r>1, und den Gewichtungsfaktoren a_{G} und a_{B} verwendet werden. Die nichtlinear transformierten Intensitäten werden anschließend miteinander verknüpft, z.B. voneinander subtrahiert oder miteinander addiert.

Von den Intensitäten I_{K} des kombinierten Spektralkanals K, die für die verschiedenen Zeitpunkte t=t₁, t₂, t₃,... ermittelt wurden, wird anschließend, für jede y-Position individuell, deren (zeitlicher) Mittelwert µ_{K} bestimmt und deren (zeitliche) Standardabweichung σ_{K}. Diese sind als Funktion der y-Position in Figur 2d, 2e aufgetragen. Der Mittelwert µ_{K}(y) ergibt sich aus einer zeitlichen Mittelung über die Intensitäten I_{K}(y, t) des kombinierten Spektralkanals K, die als Funktion der Zeit t, für verschiedene Orte y entlang der y-Richtung (entlang des Fensters 6 quer zur Transportrichtung) ermittelt werden.

Aus dem Mittelwert µ_{K} und der Standardabweichung σ_{K} wird anschließend der Quotient Q=µ_{K/}(1+σ_{K}) gebildet, der in Figur 2f für jede der y-Positionen individuell aufgetragen ist. Für die Verschmutzungsprüfung wird der Quotient Q z.B. mit einer Schwelle S_{D} verglichen, vgl. Figur 2f. An denjenigen y-Positionen, an denen die Schwelle S_{D} überschritten wird, wird auf das Vorliegen einer dunklen Verschmutzung D des Fensters 6 der Messvorrichtung 1 zurückgeschlossen. Im gezeigten Beispiel übersteigt der Quotient Q die Schwelle S_{D} an den vier y-Positionen y1, y2, y3, y4, an denen daher dunkle Verschmutzungen D1, D2, D3, D4 festgestellt werden. An diesen Positionen y1, y2, y3, y4 wird eine sehr geringe Standardabweichung σ_{K} festgestellt, vgl. Figur 2e, und gleichzeitig ein Mittelwert µ_{K}, der deutlich über den geringsten Mittelwerten liegt, die entlang der y-Richtung vorliegen, vgl. Figur 2d.

An den y-Positionen y1, y2, y4 der dunklen Verschmutzungen D1, D2, D4 wird in den Spektralkanälen G und B selbst keine über der Schwelle S_{H} liegenden Intensitäten I_{G} und I_{B} detektiert, vgl. Figuren 2a und 2b. Mit D1, D2, D4 werden also Verschmutzungen gefunden, die bei der bisherigen Prüfung auf helle Verschmutzung nicht gefunden werden. An der Position y3 wird die dunkler Verschmutzung D3 festgestellt, die auch in den detektierten Intensitäten I_{G}, I_{B} selbst zu einem etwas erhöhten Signal führt, vgl. Figuren 2a, 2b. An der y-Position y3 wird die Schwelle S_{H} der hellen Verschmutzungsprüfung bei der bisherigen Verschmutzungsprüfung allerdings ausschließlich im Spektralkanal B überschritten und dies nur geringfügig. Durch die erfindungsgemäße Verschmutzungsprüfung kann eine Verschmutzung, wie die an der y-Position y3, deutlicher zuverlässiger gefunden werden. Bevorzugt werden zur Verschmutzungsprüfung des Fensters 6 sowohl die bisherige Verschmutzungsprüfung (vgl. Figuren 2a-b) zur Prüfung auf helle Verschmutzung als auch die erfindungsgemäße Verschmutzungsprüfung (vgl. Figuren 2c-f) auf dunkle Verschmutzung verwendet, um beide Sorten von Verschmutzungen zuverlässig zu finden.

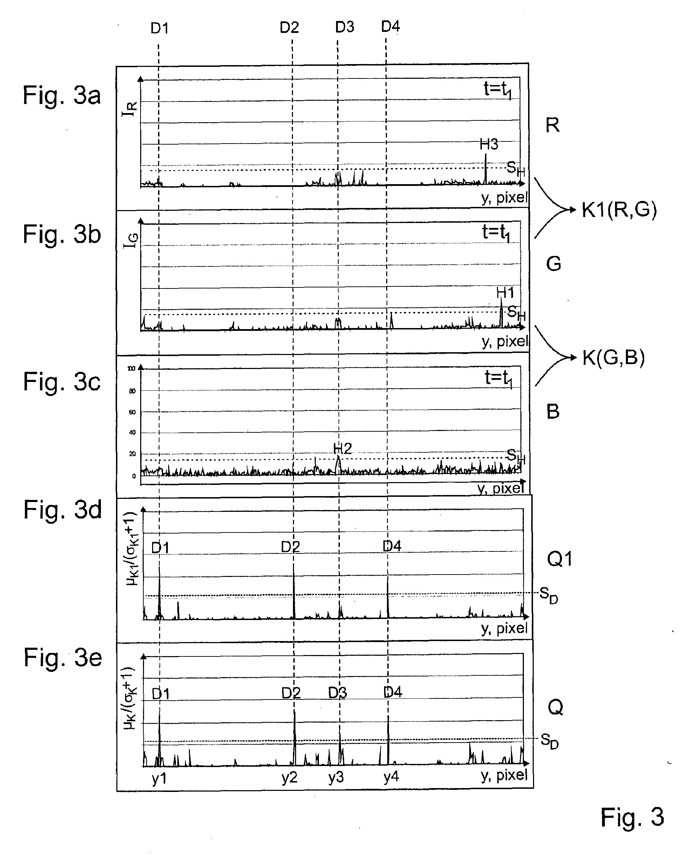

In Figur 3b und 3c sind die Intensitäten I_{G} und I_{B} der Figuren 2a und 2b zum Vergleich mit der zum Zeitpunkt t₁ detektierten Intensität I_{R} des roten Spektralkanals R aufgetragen, vgl. Figur 3a. Im Spektralkanal R wird eine weitere helle Verschmutzung H3 gefunden. Außerdem ist in Figur 3e der bereits in Figur 2f gezeigte Verlauf des Quotienten Q=µ_{K}/(1+σ_{K}) als Funktion der y-Position aufgetragen, der für den kombinierten Spektralkanal K ermittelt wurde. Zum Vergleich dazu ist in Figur 3d der Quotient Q1=µ_{K1}/(1+σ_{K1}) für einen weiteren kombinierten Spektralkanal K1 gezeigt, der sich durch Kombination des Spektralkanals R mit dem Spektralkanal G ergibt. Der weitere kombinierte Spektralkanal K1 wird durch eine nichtlineare Transformation der Intensitäten I_{R} und I_{G} der Spektralkanäle R und G und eine Verknüpfung der nichtlinear transformierten Intensitäten in Analogie zum Spektralkanal K ermittelt, wobei lediglich statt Spektralkanal G der Spektralkanal R und statt Spektralkanal B der Spektralkanal G verwendet wird. Mit Hilfe eines analogen Schwellenvergleich können auch anhand des Quotienten Q1 die dunklen Verschmutzungen D1, D2 und D4 gefunden werden, vgl. Figur 3d. Es kann aber auch vorgesehen sein, dass bei der Auswertung erst dann auf das Vorliegen einer dunklen Verschmutzung zurückgeschlossen wird, wenn in zwei oder mehr kombinierten Spektralkanälen an derselben y-Position ein Überschreiten der jeweiligen Schwelle festgestellt wird. Diese Schwellen können gleich oder unterschiedlich hoch liegen.

## Patentansprüche

1. Verfahren zur Verschmutzungsprüfung eines Fensters (6) einer Messvorrichtung (1) zur Prüfung von Blattgut (10), das entlang eines Transportpfads (T) in einer Transportrichtung (x) an der Messvorrichtung (1) vorbeitransportiert wird, wobei die Messvorrichtung (1)
- für mindestens zwei verschiedene Spektralkanäle (R, G, B, IR) jeweils eine Sensorzeile (3a-d) aufweist, die mehrere Detektionselemente entlang einer y-Richtung quer zur Transportrichtung (x) des Blattguts aufweist, um von einem Blattgut (10) ausgehendes Licht zu detektieren, wenn ein Blattgut (10) im Erfassungsbereich der Sensorzeile vorhanden ist, und
- mindestens ein Fenster (6) aufweist, das zwischen den Sensorzeilen (3a-d) und dem Transportpfad (T) des Blattguts (10) angeordnet ist, und
wobei zur Verschmutzungsprüfung des Fensters (6) die Intensitäten des durch das Fenster (6) auf die Sensorzeilen (3a-d) treffenden Lichts detektiert werden, wenn kein Blattgut (10) im Erfassungsbereich der Sensorzeilen (3a-d) vorhanden ist, **dadurch gekennzeichnet, dass** zur Verschmutzungsprüfung des Fensters (6)
- mindestens zwei der Sensorzeilen (3a-d) mit verschiedenem Spektralkanal (R, G, B, IR) jeweils an mindestens einer y-Position entlang der y-Richtung die Intensität (I_{R}, I_{G}, I_{B}, I_{IR}) des durch das Fenster (6) auf die jeweilige Sensorzeile (3a-d) treffenden Lichts jeweils für mehrere Detektionszeitpunkte (t₁, t₂, ...) detektieren, wenn kein Blattgut im Erfassungsbereich der Sensorzeilen (3a-d) vorhanden ist, und
- aus den Intensitäten (I_{R}, I_{G}, I_{B}, I_{IR}), die die mindestens zwei Sensorzeilen (3a-d) mit verschiedenem Spektralkanal (R, G, B, IR) zu einem Detektionszeitpunkt (t) detektieren, eine Intensität (I_{K}(t)) eines kombinierten Spektralkanals (K) ermittelt wird, wobei die Intensität (I_{K}(t₁), I_{K}(t₂),...) des kombinierten Spektralkanals (K) jeweils für mehrere der Detektionszeitpunkte (t₁, t₂, ...) individuell ermittelt wird, und
- eine statistische Auswertung der für die mehreren Detektionszeitpunkte (t₁, t₂, ...) ermittelten Intensitäten (I_{K}(t₁), I_{K}(t₂),...) des kombinierten Spektralkanals (K) durchgeführt wird, und
- anhand der Ergebnisse der statistischen Auswertung eine Verschmutzungsprüfung des Fensters (6) der Messvorrichtung (1) durchgeführt wird.

2. Verfahren nach Anspruch 1, **dadurch gekennzeichnet, dass**, wenn kein Blattgut (10) im Erfassungsbereich der Sensorzeilen (3a-d) vorhanden ist, die Sensorzeilen (3a-d) in ihrem jeweiligen Spektralkanal (R, G, B, IR) die Intensitäten (I_{R}, I_{G}, I_{B}, I_{IR}) an mehreren y-Positionen entlang der y-Richtung detektieren, und dass die an den mehreren y-Positionen detektierten Intensitäten zur Verschmutzungsprüfung des Fensters verwendet werden.

3. Verfahren nach Anspruch 2, **dadurch gekennzeichnet, dass** die Intensitäten (I_{R}, I_{G}, I_{B}, I_{IR}), die die Sensorzeilen (3a-d) der verschiedenen Spektralkanäle (R, G, B, IR) zum jeweiligen Detektionszeitpunkt (t₁, t₂, ...) detektieren, für mehrere der y-Positionen jeweils individuell zu einer Intensität ((I_{K}(t₁, y), I_{K}(t₂, y),...) des kombinierten Spektralkanals (K) kombiniert werden.

4. Verfahren nach Anspruch 2 oder 3, **dadurch gekennzeichnet, dass** die statistische Auswertung der Intensitäten (I_{K}(t, y)) des kombinierten Spektralkanals (K) für mehrere der y-Positionen jeweils individuell durchgeführt wird und dass anhand der statistischen Auswertung für mehrere der y-Positionen jeweils individuell geprüft wird, ob an der jeweiligen y-Position des Fensters eine Verschmutzung des Fensters (6) der Messvorrichtung vorliegt.

5. Verfahren nach einem der vorhergehenden Ansprüche, **dadurch gekennzeichnet, dass** Ermitteln der Intensität (I_{K}(t)) des kombinierten Spektralkanals (K), insbesondere für mehrere der y-Positionen jeweils individuell, eine nichtlineare Transformation der Intensität (I_{R}, I_{G}, I_{B}, I_{IR}) mindestens eines der mindestens zwei Spektralkanäle (R, G, B, IR) umfasst, vorzugsweise jedes der mindestens zwei Spektralkanäle (R, G, B, IR).

6. Verfahren nach einem der vorhergehenden Ansprüche, **dadurch gekennzeichnet, dass** die statistische Auswertung der Intensität (I_{K}(t, y)) des kombinierten Spektralkanals (K), insbesondere für mehrere der y-Positionen jeweils individuell, umfasst, dass der Verlauf der Intensität (I_{K}(t, y)) des kombinierten Spektralkanals (K) als Funktion der Zeit für mindestens 5 Detektionszeitpunkte (t₁, t₂, t₃, ...) statistisch ausgewertet wird, insbesondere für mindestens 5 aufeinanderfolgende Detektionszeitpunkte.

7. Verfahren nach einem der vorhergehenden Ansprüche, **dadurch gekennzeichnet, dass** die statistische Auswertung der Intensitäten (I_{K}(t, y)) des kombinierten Spektralkanals (K), insbesondere für mehrere der y-Positionen jeweils individuell, das Bilden einer zeitlichen Standardabweichung (σ_{K}(y)) der Intensitäten (I_{K}(t, y)) des kombinierten Spektralkanals (K) umfasst, die für die mehreren Detektionszeitpunkte (t₁, t₂, ...) ermittelt werden, vorzugsweise das Bilden eines zeitlichen Mittelwerts (µ_{K}(y) und einer zeitlichen Standardabweichung (σ_{K}(y)).

8. Verfahren nach Anspruch 7, **dadurch gekennzeichnet, dass** bei der statistischen Auswertung, insbesondere für mehrere der y-Positionen jeweils individuell, ein Quotient (Q) gebildet wird, in dessen Zähler der zeitliche Mittelwert (µ_{K}(y)) der Intensität (I_{K}(t, y)) des kombinierten Spektralkanals (K) und in dessen Nenner die zeitlichen Standardabweichung (σ_{K}(y)) der Intensität (I_{K}(t, y)) des kombinierten Spektralkanals (K) enthalten ist.

9. Verfahren nach Anspruch 8, **dadurch gekennzeichnet, dass** zur Verschmutzungsprüfung des Fensters (6) der Quotient (Q) aus dem Mittelwert (µ_{K}(y)) und der Standardabweichung (σ_{K}(y)), insbesondere für mehrere der y-Positionen jeweils individuell, mit einem Schwellenwert (S_{D}) verglichen wird und bei Überschreiten des Schwellenwerts gefolgert wird, dass an der jeweiligen y-Position, an welcher der Schwellenwert (S_{D}) überschritten wird, eine Verschmutzung des Fensters (6) vorliegt.

10. Verfahren nach Anspruch 8 oder 9, **dadurch gekennzeichnet, dass** der Quotient (Q) aus dem Mittelwert (µ_{K}(y)) und der Standardabweichung (σ_{K}(y)), insbesondere für mehrere der y-Positionen jeweils individuell, mit einem oder mehreren der Quotienten verglichen wird, die für eine oder mehrere in y-Richtung benachbarte y-Positionen gebildet wurden und anhand der Unterschiede zwischen den Quotienten an den verschiedenen y-Positionen auf eine Verschmutzung des Fensters (6) zurückgeschlossen wird.

11. Verfahren nach einem der vorhergehenden Ansprüche, **dadurch gekennzeichnet, dass** das Verfahren für mindestens zwei verschiedene kombinierte Spektralkanäle (K, K1) durchgeführt wird, wobei zur Verschmutzungsprüfung des Fensters (6) die Ergebnisse der statistischen Auswertung der mindestens zwei kombinierten Spektralkanäle (K, K1) verwendet werden.

12. Verfahren nach einem der vorhergehenden Ansprüche, **dadurch gekennzeichnet, dass** zur Prüfung des Blattguts ein Bild des Blattguts (10) detektiert wird, das entlang der Transportrichtung (x) über das Blattgut (10) hinausgeht, und dass zur Verschmutzungsprüfung des Fensters (6) ein Bildbereich ausgewertet wird, der auf dem Bild entlang der Transportrichtung vor und/ oder nach dem Blattgut (10) angeordnet ist.

13. Messvorrichtung (1) zur Prüfung von Blattgut, das entlang eines Transportpfads (T) in einer Transportrichtung (x) an der Messvorrichtung vorbeitransportiert wird, und die aufweist:
- für mindestens zwei verschiedene Spektralkanäle (R, G, B, IR) jeweils eine Sensorzeile (3a-d), die mehrere Detektionselemente entlang einer y-Richtung quer zur Transportrichtung (x) des Blattguts aufweist, um von dem Blattgut ausgehendes Licht zu detektieren, wenn ein Blattgut (10) im Erfassungsbereich der Sensorzeilen (3a-d) vorhanden ist, und zur Verschmutzungsprüfung des Fensters (6) die Intensitäten des durch das Fenster (6) auf die Sensorzeilen (3a-d) treffenden Lichts zu detektieren, wenn kein Blattgut (10) im Erfassungsbereich der Sensorzeilen (3a-d) vorhanden ist,
- mindestens ein Fenster (6), das zwischen den Sensorzeilen (3a-d) und dem Transportpfad (T) des Blattguts (10) angeordnet ist, und
- mindestens eine Auswerteeinrichtung (5), die dazu ausgebildet ist, zur Verschmutzungsprüfung des Fensters (6) die Intensitäten des durch die Sensorzeilen (3a-d) detektierten Lichts auszuwerten,
**dadurch gekennzeichnet,**
- **dass** die Messvorrichtung (1) dazu ausgebildet ist, dass zur Verschmutzungsprüfung des Fensters (6) mindestens zwei der Sensorzeilen (3a-d) mit verschiedenem Spektralkanal (R, G, B, IR), an mindestens einer y-Position entlang der y-Richtung, jeweils die Intensität (I_{R}, I_{G}, I_{B}, I_{IR}) des durch das Fenster (6) auf die Sensorzeile (3a-d) treffenden Lichts für mehrere Detektionszeitpunkte (t₁, t₂, ...) detektieren, wenn kein Blattgut (10) im Erfassungsbereich der Sensorzeilen (3a-d) vorhanden ist, und
- **dass** die Auswerteeinrichtung (5) dazu ausgebildet ist, aus den Intensitäten (I_{R}, I_{G}, I_{B}, I_{IR}), die die Sensorzeilen (3a-d) mit verschiedenem Spektralkanal (R, G, B, IR) zu einem Detektionszeitpunkt (t) detektieren, eine Intensität (I_{K}(t)) eines kombinierten Spektralkanals (K) zu ermitteln, wobei jeweils für mehrere der Detektionszeitpunkte (t₁, t₂, ...) individuell eine Intensität (I_{K}(t₁), I_{K}(t₂),...) des kombinierten Spektralkanals (K) ermittelt wird, und eine statistische Auswertung der für die mehreren Detektionszeitpunkte (t₁, t₂, ...) ermittelten Intensitäten (I_{K}(t₁), I_{K}(t₂),...) des kombinierten Spektralkanals (K) durchzuführen, und anhand der Ergebnisse der statistischen Auswertung eine Verschmutzungsprüfung des Fensters (6) der Messvorrichtung (1) durchzuführen.

14. Messvorrichtung (1) nach Anspruch 14, **dadurch gekennzeichnet, dass** die Auswerteeinrichtung (5) zur Durchführung des Verfahrens nach einem oder mehreren der Ansprüche 1 bis 12 ausgebildet ist.

15. Vorrichtung zur Bearbeitung von Blattgut (10), insbesondere von Wertdokumenten, die dazu eingerichtet ist, Blattgut (10) entlang eines Transportpfads (T) an einer Messvorrichtung vorbeizutransportieren, **dadurch gekennzeichnet, dass** die Messvorrichtung eine Messvorrichtung (1) nach einem der Ansprüche 13 bis 14 ist.

## Claims

1. A method for checking the soiling of a window (6) of a measuring apparatus (1) for checking sheet material (10) that is transported past the measuring apparatus (1) along a transport path (T) in a transport direction (x), wherein the measuring apparatus (1)
- has respectively one sensor row (3a-d) for at least two different spectral channels (R, G, B, IR), said sensor row having several detection elements along a y direction transversal to the transport direction (x) of the sheet material, to detect light emanating from a sheet material (10), when a sheet material (10) is present in the capture area of the sensor row, and
- has at least one window (6) arranged between the sensor rows (3a-d) and the transport path (T) of the sheet material (10), and
wherein for checking the soiling of the window (6) the intensities of the light impinging on the sensor rows (3a-d) through the window (6) are detected when no sheet material (10) is present in the capture area of the sensor rows (3a-d), **characterized in that** for checking the soiling of the window (6)
- at least two of the sensor rows (3a-d) with different spectral channel (R, G, B, IR) detect, in respectively at least one y position along the y direction, the intensity (I_{R}, I_{G}, I_{B}, I_{IR}) of the light impinging on the respective sensor row (3a-d) through the window (6) respectively for several detection times (t₁, t₂, ...), when no sheet material is present in the capture area of the sensor rows (3a-d), and
- from the intensities (I_{R}, I_{G}, I_{B}, I_{IR}) detected by the at least two sensor rows (3a-d) with different spectral channel (R, G, B, IR) at a detection time (t), an intensity (I_{K}(t)) is determined of a combined spectral channel (K), wherein the intensity (I_{K}(t₁), (I_{K}(t₂), ...) of the combined spectral channel (K) is determined individually respectively for several of the detection times (t₁, t₂, ...), and
- a statistical evaluation is carried out for the intensities (I_{K}(t₁), I_{K}(t₂), ...) of the combined spectral channel (K) determined for the several detection times (t₁, t₂, ...), and
- on the basis of the results of the statistical evaluation a soiling check of the window (6) of the measuring apparatus (1) is carried out.

2. The method according to claim 1, **characterized in that** when no sheet material (10) is present in the capture area of the sensor rows (3a-d), the sensor rows (3a-d) detect in their respective spectral channel (R, G, B, IR) the intensities (I_{R}, I_{G}, I_{B}, I_{IR}) in several y positions along the y direction, and that the intensities detected in the several y positions are employed for checking the soiling of the window.

3. The method according to claim 2, **characterized in that** the intensities (I_{R}, I_{G}, I_{B}, I_{IR}) detected by the sensor rows (3a-d) of the different spectral channels (R, G, B, IR) at the respective detection time (t₁, t₂, ...) are combined for several of the y positions respectively individually to form an intensity (I_{K}(t₁, y), I_{K}(t₂, y), ....) of the combined spectral channel (K).

4. The method according to claim 2 or 3, **characterized in that** the statistical evaluation of the intensities (I_{K}(t, y)) of the combined spectral channel (K) is carried out respectively individually for several of the y positions, and that it is checked respectively individually for several of the y positions on the basis of the statistical evaluation whether a soiling of the window (6) of the measuring apparatus is present in the respective y position of the window.

5. The method according to any of the preceding claims, **characterized in that** the determining of the intensity (I_{K}(t)) of the combined spectral channel (K), in particular respectively individually for several of the y positions, comprises a nonlinear transformation of the intensity (I_{R}, I_{G}, I_{B}, I_{IR}) of at least one of the at least two spectral channels (R, G, B, IR), preferably of each of the at least two spectral channels (R, G, B, IR).

6. The method according to any of the preceding claims, **characterized in that** the statistical evaluation of the intensity (I_{K}(t, y)) of the combined spectral channel (K), in particular respectively individually for several of the y positions, comprises that the curve of the intensity (I_{K}(t, y)) of the combined spectral channel (K) as a function of the time for at least 5 detection times (t₁, t₂, t₃, ...) is statistically evaluated, in particular for at least 5 consecutive detection times.

7. The method according to any of the preceding claims, **characterized in that** the statistical evaluation of the intensities (I_{K}(t, y)) of the combined spectral channel (K), in particular respectively individually for several of the y positions, comprises the forming of a temporal standard deviation (σ_{K}(y)) of the intensities (I_{K}(t, y)) of the combined spectral channel (K), which are determined for the several detection times (t₁, t₂, ...), preferably the forming of a temporal average value (µ_{K}(y)) and of a temporal standard deviation (σ_{K}(y)).

8. The method according to claim 7, **characterized in that** in the statistical evaluation, in particular respectively individually for several of the y positions, a quotient (Q) is formed, in the numerator of which there is contained the temporal average value (µ_{K}(y)) of the intensity (I_{K}(t, y)) of the combined spectral channel (K), and in the denominator of which there is contained the temporal standard deviation (σ_{K}(y)) of the intensity (I_{K}(t, y)) of the combined spectral channel (K).

9. The method according to claim 8, **characterized in that** for checking the soiling of the window (6) the quotient (Q) of the average value (µ_{K}(y)) and the standard deviation (σ_{K}(y)), in particular respectively individually for several of the y positions, is compared to a threshold value (S_{D}) and it is concluded upon exceeding the threshold value that a soiling of the window (6) is present in the respective y position in which the threshold value (S_{D}) is exceeded.

10. The method according to claim 8 or 9, **characterized in that** the quotient (Q) of the average value (µ_{K}(y)) and the standard deviation (σ_{K}(y)), in particular respectively individually for several of the y positions, is compared to one or several of the quotients formed for one or several adjacent y positions in the y direction, and a conclusion is drawn as to a soiling of the window (6) on the basis of the differences between the quotients in the different y positions.

11. The method according to any of the preceding claims, **characterized in that** the method is carried out for at least two different combined spectral channels (K, K1), wherein for checking the soiling of the window (6) the results of the statistical evaluation of the at least two combined spectral channels (K, K1) are employed.

12. The method according to any of the preceding claims, **characterized in that** for checking the sheet material an image of the sheet material (10) is detected which goes beyond the sheet material (10) along the transport direction (x), and that for checking the soiling of the window (6) an image area is evaluated that is arranged on the image in front of and/or behind the sheet material (10) along the transport direction.

13. A measuring apparatus (1) for checking sheet material transported past the measuring apparatus along a transport path (T) in a transport direction (x), having:
- for at least two different spectral channels (R, G, B, IR) respectively one sensor row (3a-d) having several detection elements along a y direction transversal to the transport direction (x) of the sheet material, to detect light emanating from the sheet material when a sheet material (10) is present in the capture area of the sensor rows (3a-d), and, for checking the soiling of the window (6), to detect the intensities of the light impinging on the sensor rows (3a-d) through the window (6) when no sheet material (10) is present in the capture area of the sensor rows (3a-d),
- at least one window (6) arranged between the sensor rows (3a-d) and the transport path (T) of the sheet material (10), and
- at least one evaluation device (5) configured to evaluate the intensities of the light detected by the sensor rows (3a-d) for checking the soiling of the window (6),
**characterized in that**
- the measuring apparatus (1) is so configured that for checking the soiling of the window (6) at least two of the sensor rows (3a-d) with different spectral channel (R, G, B, IR) detect, in at least one y position along the y direction, respectively the intensity (I_{R}, I_{G}, I_{B}, I_{IR}) of the light impinging on the sensor row (3a-d) through the window (6) for several detection times (t₁, t₂, ...), when no sheet material (10) is present in the capture area of the sensor rows (3a-d), and
- the evaluation device (5) is configured to determine, from the intensities (I_{R}, I_{G}, I_{B}, I_{IR}) detected by the sensor rows (3a-d) with different spectral channel (R, G, B, IR) at a detection time (t), an intensity (I_{K}(t)) of a combined spectral channel (K), wherein an intensity (I_{K}(t₁), (I_{K}(t₂), ...) of the combined spectral channel (K) is determined respectively individually for several of the detection times (t₁, t₂, ...), and to carry out a statistical evaluation of the intensities (I_{K}(t₁), (I_{K}(t₂), ...) of the combined spectral channel (K) determined for the several detection times (t₁, t₂, ...), and to carry out a soiling check of the window (6) of the measuring apparatus (1) on the basis of the results of the statistical evaluation.

14. The measuring apparatus (1) according to claim 14, **characterized in that** the evaluation device (5) is configured to carry out the method according to one or several of the claims 1 to 12.

15. An apparatus for processing sheet material (10), in particular value documents, which is adapted to transport sheet material (10) past a measuring apparatus along a transport path (T), **characterized in that** the measuring apparatus is a measuring apparatus (1) according to any of the claims 13 to 14.

## Revendications

1. Procédé de vérification de l'encrassement d'une fenêtre (6) d'un dispositif de mesure (1) destiné à la vérification de produit en feuilles (10) transporté le long d'un chemin de transport (T) dans une direction de transport (x) en passant par le dispositif de mesure (1), cependant que le dispositif de mesure (1)
- pour au moins deux canaux spectraux (R, G, B, IR) différents, comporte respectivement une ligne de capteurs (3a-d) qui comporte plusieurs éléments de détection le long d'une direction y transversalement à la direction de transport (x) du produit en feuilles afin de détecter de la lumière émanant d'un produit en feuilles (10) quand un produit en feuilles (10) se trouve dans la zone de balayage de la ligne de capteur, et comporte au moins une fenêtre (6) située entre les lignes de capteur (3a-d) et le chemin de transport (T) du produit en feuilles (10), et
pour la vérification de l'encrassement de la fenêtre (6), les intensités de la lumière atteignant les lignes de capteur (3a-d) à travers la fenêtre (6) sont détectées quand aucun produit en feuilles (10) ne se trouve dans la zone de balayage des lignes de capteur (3a-d), **caractérisé en ce que,** pour la vérification de l'encrassement de la fenêtre (6),
- au moins deux des lignes de capteur (3a-d) à canal spectral (R, G, B, IR) différent détectent respectivement pour plusieurs moments de détection (t₁, t₂, ...) respectivement à au moins une position y le long de la direction y l'intensité (I_{R}, I_{G}, I_{B}, I_{IR}) de la lumière atteignant la ligne de capteurs (3a-d) respective à travers la fenêtre (6) quand aucun produit en feuilles ne se trouve dans la zone de balayage des lignes de capteur (3a-d), et
- à partir des intensités (I_{R}, I_{G}, I_{B}, I_{IR}) que les au moins deux des lignes de capteur (3a-d) à canal spectral (R, G, B, IR) différent détectent à un moment de détection (t), une intensité (I_{K}(t)) d'un canal spectral (K) combiné est déterminée, l'intensité (I_{K}(t₁), (I_{K}(t₂), ...) du canal spectral (K) combiné étant individuellement déterminée respectivement pour plusieurs des moments de détection (t₁, t₂, ...), et
- une évaluation statistique des intensités (I_{K}(t₁), (I_{K}(t₂), ...) du canal spectral (K) combiné déterminées pour les plusieurs moments de détection (t₁, t₂, ...) est effectuée, et
- à l'aide des résultats de l'évaluation statistique, une vérification de l'encrassement de la fenêtre (6) du dispositif de mesure (1) est effectuée.

2. Procédé selon la revendication 1, **caractérisé en ce que**, quand aucun produit en feuilles (10) ne se trouve dans la zone de balayage des lignes de capteur (3a-d), les lignes de capteur (3a-d) détectent dans leur canal spectral (R, G, B, IR) respectif les intensités (I_{R}, I_{G}, I_{B}, I_{IR}), à plusieurs positions y le long de la direction y, et **en ce que** les intensités détectées aux plusieurs positions y sont utilisées pour la vérification de l'encrassement de la fenêtre.

3. Procédé selon la revendication 2, **caractérisé en ce que** les intensités (I_{R}, I_{G}, I_{B}, I_{IR}) que les lignes de capteur (3a-d) des différents canaux spectraux (R, G, B, IR) détectent au moment de détection (t₁, t₂, ...) respectif sont, pour plusieurs des positions y, combinées respectivement individuellement de manière à révéler une intensité (I_{K}(t₁, y), (I_{K}(t₂, y), ...) du canal spectral (K) combiné.

4. Procédé selon la revendication 2 ou 3, **caractérisé en ce que** l'évaluation statistique des intensités (I_{K}(t, y)) du canal spectral (K) combiné est effectuée respectivement individuellement pour plusieurs des positions y, et **en ce que**, à l'aide de l'évaluation statistique pour plusieurs des positions y, il est respectivement vérifié individuellement si, à la position y respective de la fenêtre, il y a un encrassement de la fenêtre (6) du dispositif de mesure.

5. Procédé selon une des revendications précédentes, **caractérisé en ce que** la détermination de l'intensité (I_{K}(t)) du canal spectral (K) combiné comprend, en particulier pour plusieurs des positions y respectivement individuellement, une transformation non linéaire de l'intensité (I_{R}, I_{G}, I_{B}, I_{IR}) d'au moins un des au moins deux canaux spectraux (R, G, B, IR), de préférence de chacun des au moins deux canaux spectraux (R, G, B, IR).

6. Procédé selon une des revendications précédentes, **caractérisé en ce que** l'évaluation statistique de l'intensité (I_{K}(t, y)) du canal spectral (K) combiné comprend, en particulier pour plusieurs des positions y respectivement individuellement, que la courbe de l'intensité (I_{K}(t, y)) du canal spectral (K) combiné est évaluée statistiquement en tant que fonction du temps pour au moins 5 moments de détection (t₁, t₂, t₃ ...), en particulier pour au moins 5 moments de détection consécutifs.

7. Procédé selon une des revendications précédentes, **caractérisé en ce que** l'évaluation statistique des intensités (I_{K}(t, y)) du canal spectral (K) combiné comprend, en particulier pour plusieurs des positions y respectivement individuellement, la constitution d'un écart temporel type (σ_{K}(y)) des intensités (I_{K}(t, y)) du canal spectral (K) combiné qui sont déterminées pour les plusieurs moments de détection (t₁, t₂, ...), en particulier la constitution d'une valeur temporelle moyenne (µ_{K}(y)) et d'un écart temporel type (σ_{K}(y)).

8. Procédé selon la revendication 7, **caractérisé en ce que**, lors de l'évaluation statistique, en particulier pour plusieurs des positions y respectivement individuellement, un quotient (Q) est constitué, dans le numérateur duquel la valeur temporelle moyenne (µ_{K}(y)) de l'intensité (I_{K}(t, y)) du canal spectral (K) combiné est contenue, et dans le dénominateur duquel l'écart temporel type (σ_{K}(y)) de l'intensité (I_{K}(t, y)) du canal spectral (K) combiné est contenu.

9. Procédé selon la revendication 8, **caractérisé en ce que**, pour la vérification de l'encrassement de la fenêtre (6), le quotient (Q) de la valeur moyenne (µ_{K}(y)) et de l'écart type (σ_{K}(y)), en particulier pour plusieurs des positions y respectivement individuellement, est comparé avec une valeur seuil (S_{D}) et que, en cas de dépassement de la valeur seuil, il est déduit que, à la position y respective à laquelle la valeur seuil (S_{D}) est dépassée, il y a un encrassement de la fenêtre (6).

10. Procédé selon la revendication 8 ou 9, **caractérisé en ce que** le quotient (Q) de la valeur moyenne (µ_{K}(y)) et de l'écart type (σ_{K}(y)), en particulier pour plusieurs des positions y respectivement individuellement, est comparé avec un ou plusieurs des quotients qui ont été constitués pour une ou plusieurs positions y adjacentes en direction y, et **en ce que**, à l'aide des différences entre les quotients aux différentes positions y, il est tiré une conclusion quant à l'encrassement de la fenêtre (6).

11. Procédé selon une des revendications précédentes, **caractérisé en ce que** le procédé est effectué pour au moins deux canaux spectraux (K, K1) combinés différents, les résultats de l'évaluation statistique des au moins deux canaux spectraux (K, K1) combinés étant utilisés pour la vérification de l'encrassement de la fenêtre (6).

12. Procédé selon une des revendications précédentes, **caractérisé en ce que**, pour la vérification du produit en feuilles, une image du produit en feuilles (10) outrepassant le produit en feuilles (10) le long de la direction de transport (x) est détectée, et **en ce que**, pour la vérification de l'encrassement de la fenêtre (6), une zone d'image située sur l'image le long de la direction de transport (x) avant et/ou après le produit en feuilles (10) est évaluée.

13. Dispositif de mesure (1) destiné à la vérification de produit en feuilles transporté le long d'un chemin de transport (T) dans une direction de transport (x) en passant par le dispositif de mesure, et qui comporte :
- pour au moins deux canaux spectraux (R, G, B, IR) différents, respectivement une ligne de capteurs (3a-d) qui comporte plusieurs éléments de détection le long d'une direction y transversalement à la direction de transport (x) du produit en feuilles, afin de détecter de la lumière émanant du produit en feuilles quand un produit en feuilles (10) se trouve dans la zone de balayage de la ligne de capteurs (3a-d), et afin de, pour la vérification de l'encrassement de la fenêtre (6), détecter les intensités de la lumière atteignant les lignes de capteur (3a-d) à travers la fenêtre (6) quand aucun produit en feuilles (10) ne se trouve dans la zone de balayage des lignes de capteur (3a-d),
- au moins une fenêtre (6) située entre les lignes de capteur (3a-d) et le chemin de transport (T) du produit en feuilles (10), et
- au moins un dispositif d'évaluation (5) qui, pour la vérification de l'encrassement de la fenêtre (6), est conçu pour évaluer les intensités de la lumière détectée par les lignes de capteur (3a-d),
**caractérisé en ce**
- **que** le dispositif de mesure (1) est conçu pour que, pour la vérification de l'encrassement de la fenêtre (6), au moins deux des lignes de capteur (3a-d) à canaux spectraux (R, G, B, IR) différents détectent, pour plusieurs moments de détection (t₁, t₂, ...), à au moins une position y le long de la direction y, respectivement l'intensité (I_{R}, I_{G}, I_{B}, I_{IR}) de la lumière atteignant la ligne de capteurs (3a-d) à travers la fenêtre (6) quand aucun produit en feuilles (10) ne se trouve dans la zone de balayage des lignes de capteur (3a-d), et
- **que** le dispositif d'évaluation (5) est conçu pour, à partir des intensités (I_{R}, I_{G}, I_{B}, I_{IR}) que les lignes de capteur (3a-d) à canaux spectraux (R, G, B, IR) différents détectent à un moment de détection (t), déterminer une intensité (I_{K}(t)) d'un canal spectral (K) combiné, une intensité (I_{K}(t₁), (I_{K}(t₂), ...) du canal spectral (K) combiné étant individuellement déterminée respectivement pour plusieurs des moments de détection (t₁, t₂, ...), et effectuer une évaluation statistique des intensités (I_{K}(t₁), (I_{K}(t₂), ...) du canal spectral (K) combiné déterminées pour les plusieurs moments de détection (t₁, t₂, ...), et effectuer, à l'aide des résultats de l'évaluation statistique, une vérification de l'encrassement de la fenêtre (6) du dispositif de mesure (1).

14. Dispositif de mesure (1) selon la revendication 14, **caractérisé en ce que** le dispositif d'évaluation (5) est conçu pour l'exécution du procédé selon une ou plusieurs des revendications de 1 à 12.

15. Dispositif de traitement de produit en feuilles (10), en particulier de documents de valeur, qui est équipé pour transporter du produit en feuilles (10) le long d'un chemin de transport (T) en passant par un dispositif de mesure, **caractérisé en ce que** le dispositif de mesure est un dispositif de mesure (1) selon une des revendications de 13 à 14.
